# EUROPEAN PATENT APPLICATION

(11) **EP 3 276 325 A1**
(43) Date of publication of application: **31.01.2018**
(21) Application number: 16768332.5
(22) Date of filing: 02.03.2016
(51) Int. Cl.: G01L 23/22, F02D 35/00

(54) **COMBUSTION PRESSURE SENSOR**

(30) Priority: 24.03.2015 JP 2015061557
(71) Applicant: Citizen Finedevice Co., Ltd., Minamitsuru-gun, Yamana-shi 401-0395 (JP); Citizen Watch Co., Ltd., Tokyo 188-8511 (JP)
(72) Inventor: TAKAHASHI, Kazuo, Minamitsuru-gun Yamanashi 401-0395 (JP); IWASHITA Takashi, Minamitsuru-gun Yamanashi 401-0395 (JP)
(74) Representative: Kuhnen & Wacker
(86) International application number: PCT/JP2016/056500
(87) International publication number: WO 2016/152429

(57) **Abstract**

A combustion pressure sensor mounted to a functional component attached to a combustion chamber of an internal combustion engine is provided, wherein a pressure receiving member and a pressure detection element are supported by a housing, the pressure receiving member being a pressure receiving surface for receiving a combustion pressure, the pressure detection element detecting a pressure from the pressure receiving surface, the mounting of the combustion pressure sensor to the functional component is performed by joining the functional component and a connecting member provided to at least one of the pressure receiving member and the housing, and the connecting member is composed of a joint portion and a distortion buffer portion, the joint portion being joined with the functional component, the distortion buffer portion reducing influence of distortion occurring in the joint portion on the pressure receiving member or the housing.

This configuration prevents a failure in the pressure transmission system by providing a means for minimizing distortion of the sensor case of the combustion pressure sensor, and thus allows for a combustion pressure sensor that is capable of accurately measuring pressure.

## Description

### Technical Field

The present invention relates to a pressure sensor, and more specifically to a combustion pressure sensor that is mounted to a cylinder head of an internal combustion engine and capable of detecting pressure inside a combustion chamber.

### Background Art

Conventionally, a device using a piezoelectric element for a pressure detection portion has been proposed as a device that is, for example, mounted to a cylinder head of an internal combustion engine to detect pressure inside a combustion chamber. A combustion pressure sensor has been known that detects a combustion pressure using this pressure detection device formed in a ring shape and mounted to a functional component, such as an injector or a spark plug, attached to the combustion chamber.

As an example of this type of combustion pressure sensor formed in a ring shape and mounted to a functional component, a spark plug embedded with a pressure sensor as disclosed in, for example, Patent Document 1 has been proposed. This spark plug with the pressure sensor is formed by integrally fixing a pressure sensing portion to the spark plug by welding, and the spark plug is tightened and fixed to a cylinder head for use. The spark plug is raised by a combustion pressure generated inside a combustion chamber of an internal combustion engine, and this changes the fastening load on the spark plug. In accordance with the change in the fastening load, the pressure sensor detects a charge generated by a piezoelectric element as an electric signal and transmits this signal to a controlling device. The controlling device controls the internal combustion engine based on this pressure signal so as to improve fuel consumption for example.

### Citation List

### Patent Literature

Patent Document 1: Japanese Patent No. 4620882 (FIG. 1 and FIG. 2)

### Summary of Invention

### Technical Problem

By the way, for a ring-shaped pressure sensor mounted to a functional component such as the spark plug disclosed in Patent Document 1, it is typical to use a method that joins a case portion constituting the pressure sensor and a metal fitting constituting the functional component by laser welding. However, during a joining process by welding, thermal distortion may occur due to difference in thermal capacity, linear expansion coefficient and the like between the two parts to be joined. The thermal distortion causes a problem that an accurate output waveform corresponding to the combustion pressure cannot be obtained due to deformation of the case portion of the pressure sensor.

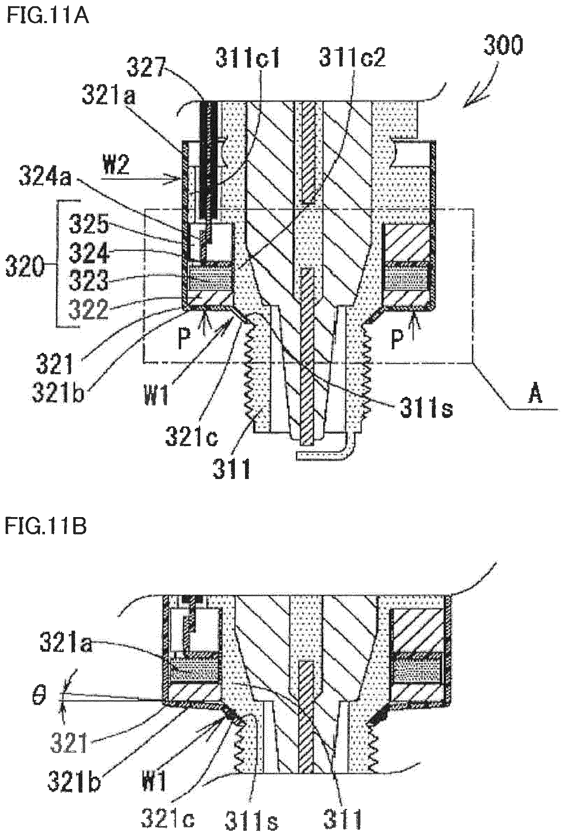

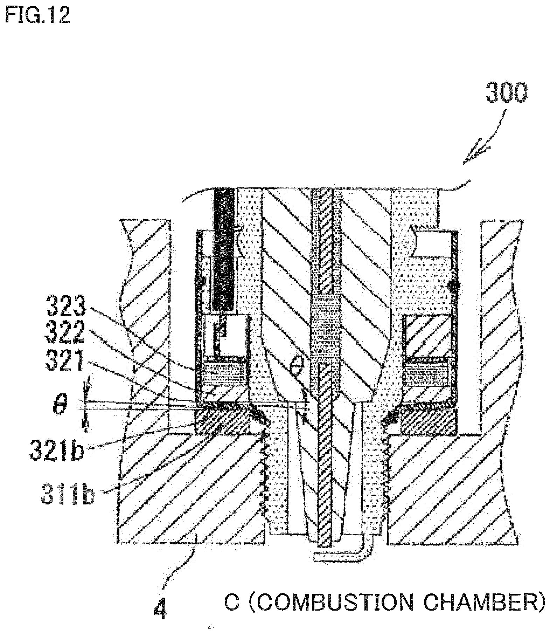

Here, the conventional technique disclosed in Patent Document 1 will be explained using FIGs. 11A, 11B and 12. FIGs. 11A, 11B and 12 are diagrams redrawn for easier explanation of the conventional technique, and the names of the components are changed to conform to the present application without departing from the gist of the invention. FIG. 11A illustrates a configuration of a spark plug 300 with a conventional combustion pressure sensor. The figure shows a state before welding. FIG. 11B is an enlarged view of the part A in FIG. 11A and shows a state after welding. FIG.12 shows a state where the spark plug 300 with the combustion pressure sensor is mounted to the cylinder head.

First, the configuration of the spark plug 300 embedded with the combustion pressure sensor will be explained using FIG. 11A. In an internal space of a sensor case 321 that is annular-shaped and composed of a cylindrical portion 321a and a bottom portion 321b, a plate packing 322, a piezoelectric element 323, an electrode plate 324, and an insulating plate 325, which are all annular-shaped, are stored so as to be stacked on the bottom portion 321b in this order from the lower side in the figure. A pressure sensor 320 is thus constituted. Further, a lead wire 327 is extended upward from a terminal 324a that is formed on a part of the annular electrode plate 324.

In the pressure sensor 320, the cylindrical portion 321a of the sensor case 321 is fitted to a first bulged portion 311c1 of a main fitting 311, and an engaging portion 321c of the sensor case 321 abuts on a case supporting portion 311s at a front end of a second bulged portion 311c2. In a state where the bottom portion 321b of the sensor case 321 is pressed with a predetermined load P from the lower side in the figure, a welding portion W1 is laser-welded along the entire circumference of the sensor case 321. Subsequently, a welding portion W2 is laser-welded along the entire circumference of the sensor case 321. Here, the pressure sensor 320 is in a state where the predetermined load P is applied to the piezoelectric element 323 as a result of the welding of the sensor case 321 and the main fitting 311. Moreover, in the pressure sensor 320, a fastening load (hereinafter referred to as an "additional load") is added to the piezoelectric element 323 due to fastening in mounting the spark plug 300 (described later) to the cylinder head. Accordingly, the pressure sensor 320 is configured to detect pressure in a state where a total load of the load P and the fastening load is acting on the piezoelectric element 323 as a preload.

Next, referring to FIG. 11B, a detailed explanation will be given of a welding process on the welding portion W1 that is more susceptible to the influence of thermal distortion among the two portions of the welding portions W1 and W2. The welding portion W1 is laser-welded along the entire circumference of the sensor case 321. However, the sensor case 321 and the main fitting 311 may be welded to each other in a state where the sensor case 321 or the main fitting 311 has been deformed by welding heat that is generated during the welding, due to difference in thermal capacity, linear expansion coefficient and the like between the sensor case 321 and the main fitting 311. For example, the bottom portion 321b of the sensor case 321 is pushed out downward in the figure due to the welding heat generated during the welding. In this case, a gap at an angle θ is formed between the bottom portion 321b and the sensor case 321, and in this state the engaging portion 321c abuts on the case supporting portion 311s to be weld-fixed at the welding portion W1 (the welding portion is indicated by a black circle in the figure). If distortion occurs in the sensor 321 or the main fitting 311 due to the welding heat and the like as explained above, it will result in unevenness of the surface pressure on the components stacked inside the sensor case 321 including the piezoelectric element, and it will also cause the load P on the piezoelectric element 323 to differ from the predetermined load set in advance.

Next, with reference to FIG. 12, an explanation is given of the state where the spark plug 300 embedded with the combustion pressure sensor is mounted to the cylinder head 4. In FIG. 12, when mounted to the cylinder head 4, the spark plug 300 embedded with the combustion pressure sensor is fitted with a gasket 311b, and a hexagonal nut portion (not shown) is rotated with a tool to fasten the spark plug 300.

Here, since the above described gap at the angle θ is formed between the bottom portion 321b of the sensor case 321 and the gasket 311b, it is difficult to uniformly apply the fastening load (additional load) to the plate packing 322 and the piezoelectric element 323 when fastening the spark plug 300 embedded with the combustion pressure sensor.

Due to the preload, which consists of the load P and the fastening load, differing from the predetermined value as described above, a deviation (hereinafter referred to as a "hysteresis") occurs between the pressure applied to the pressure sensor 320 and the output waveform of the pressure. This results in a failure to accurately measure the pressure.

### (Object of the invention)

An object of the present invention is to solve the above problem by providing a combustion pressure sensor that is capable of accurately measuring the pressure. The present invention prevents a failure in the pressure transmission system of the combustion pressure sensor by providing a means for minimizing distortion of the sensor case of the combustion pressure sensor during weld-joining of the combustion pressure sensor and a functional component.

### Solution to Problem

The present invention provides a combustion pressure sensor mounted to a functional component attached to a combustion chamber of an internal combustion engine, wherein a pressure receiving member and a pressure detection element are supported by a housing, the pressure receiving member being a pressure receiving surface for receiving a combustion pressure, the pressure detection element detecting a pressure from the pressure receiving surface, the mounting of the combustion pressure sensor to the functional component is performed by joining the functional component and a connecting member provided to at least one of the pressure receiving member and the housing, and the connecting member is composed of a joint portion and a distortion buffer portion, the joint portion being joined with the functional component, the distortion buffer portion reducing influence of distortion occurring in the joint portion on the pressure receiving member or the housing.

Further, the combustion pressure sensor is provided such that the connecting member is integrally formed with the pressure receiving member or the housing.

Further, the combustion pressure sensor is provided such that the connecting member is formed separately from the pressure receiving member or the housing.

Further, the combustion pressure sensor is provided such that the connecting member has a linear expansion coefficient that is comparable to a material of a joint portion of the functional component.

Further, the combustion pressure sensor is provided such that the joining of the functional component and the connecting member is performed by welding.

The combustion pressure sensor is provided such that the combustion pressure sensor is cylindrically shaped, the housing is composed of a housing unit and a cylindrical supporting member, the housing unit including an outer cylindrical portion and an inner cylindrical portion respectively constituting an outer surface and an inner surface of the combustion pressure sensor, and the pressure detection element is arranged inside the housing unit, and the pressure receiving member and the supporting member are arranged so as to interpose the pressure detection element.

The combustion pressure sensor is provided such that the connecting member has a cylindrical shape extending along the inner surface of the inner cylindrical portion

### Advantageous Effects of Invention

As described above, according to the configuration of the present invention, the connecting member for connecting the combustion pressure sensor and the functional component is provided with a distortion buffer portion that reduces the influence of distortion occurring in the portion to be joined with the combustion pressure sensor. This enables to minimize deformation of the housing or the pressure receiving member of the combustion pressure sensor. Therefore, the present invention provides a combustion pressure sensor that is capable of accurately measuring the pressure.

### Brief Description of Drawings

FIG. 1 illustrates a schematic configuration of an internal combustion engine according to Example 1.
FIG. 2 is an enlarged view of the part S in FIG. 1.
FIG. 3 illustrates mounting of the combustion pressure sensor to a functional component according to Example 1.
FIGs. 4A and 4B are cross-sectional views of an injector unit according to the first exemplary embodiment of Example 1.
FIGs. 5A to 5D are cross-sectional views of an assembly process according to the first exemplary embodiment of Example 1.
FIG. 6 is a cross-sectional view of an injector unit according to the second exemplary embodiment of Example 1.
FIG. 7 is a cross-sectional view of an injector unit according to the third exemplary embodiment of Example 1.
FIG. 8 is a cross-sectional view of an injector unit according to the fourth exemplary embodiment of Example 1.
FIG. 9 is a cross-sectional view of an injector unit according to the fifth exemplary embodiment of Example 1.
FIG. 10 is a cross-sectional view of a spark plug according to the first exemplary embodiment of Example 2.
FIGs. 11A and 11B are cross-sectional views of a spark plug with the conventional combustion pressure sensor.
FIG. 12 illustrates the state where the spark plug with the conventional combustion pressure sensor is mounted to the cylinder head.

### Description of Embodiments

Hereinafter, exemplary embodiments of the present invention will be described in detail with reference to the drawings. Note that the exemplary embodiments given below show an example of a combustion pressure sensor that embodies the concept of the present invention, and the present invention is not limited to the configurations given below. In particular, dimensions, materials, shapes, relative positions and the like of the components described in the exemplary embodiments do not indicate that the scope of the present invention is limited to such descriptions, unless otherwise specifically stated. These descriptions are given just as an example. Further, sizes, relative positions and the like of the members shown in each figure may be exaggerated for a clearer explanation. Also, in the following explanation, the same parts or the same components may be denoted by the same reference signs, and the detailed explanation thereof may be omitted when appropriate.

### [Features of Each Example]

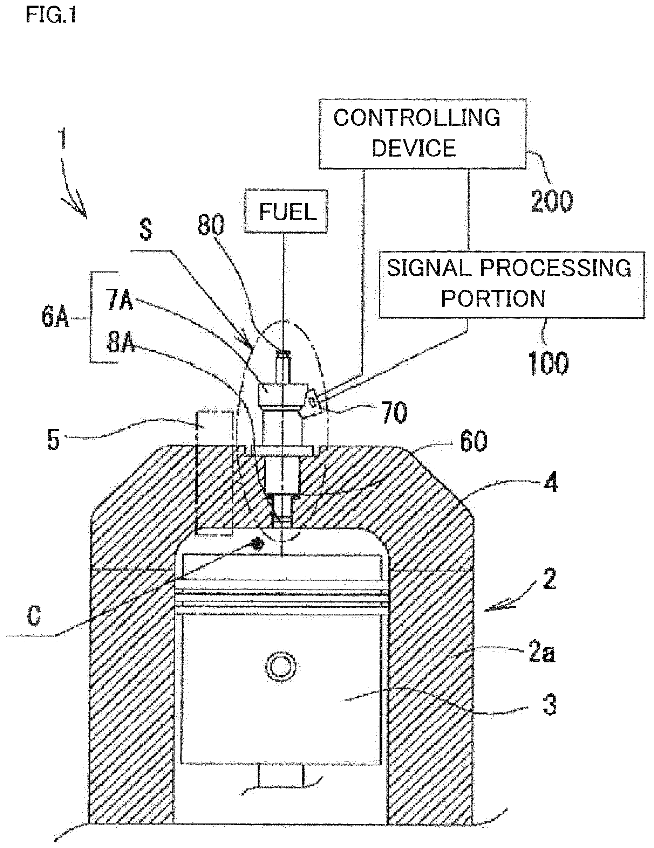

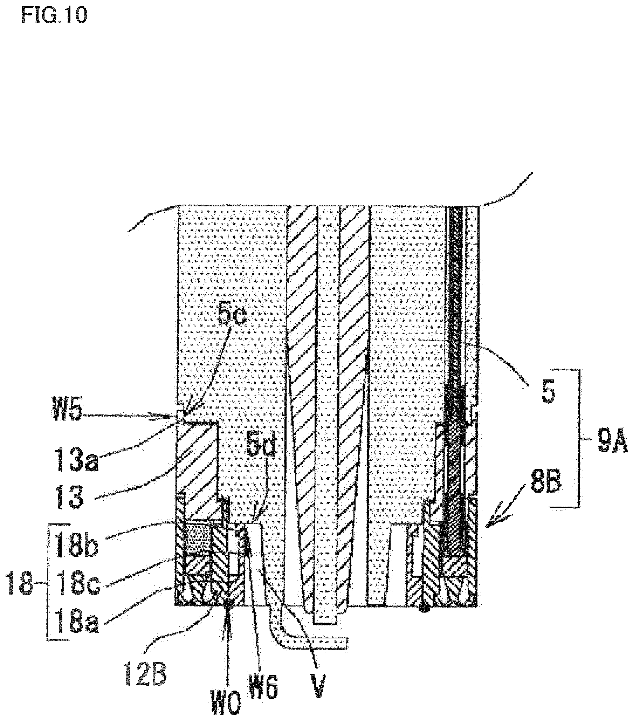

The combustion pressure sensor of the present invention is directed to improving a joint between the combustion pressure sensor and a functional component such as an injector. According to the present invention, a connecting member with a distortion buffer portion is used for joining the combustion pressure sensor and the functional component. This enables the distortion buffer portion to absorb distortion that occurs in the joint portion during joining, and thus enables to minimize deformation of a housing unit (hereinafter referred to as a "case part") of the combustion pressure sensor. Here, Example 1 is directed to improving a joint of an injector unit that is formed by mounting the combustion pressure sensor to an injector. Example 2 is directed to improving a joint of a spark plug unit that is formed by mounting the combustion pressure sensor to a spark plug. Hereinafter, Example 1 will be explained using FIGs. 1-9 and Example 2 will be explained using FIG. 10.

### Example 1

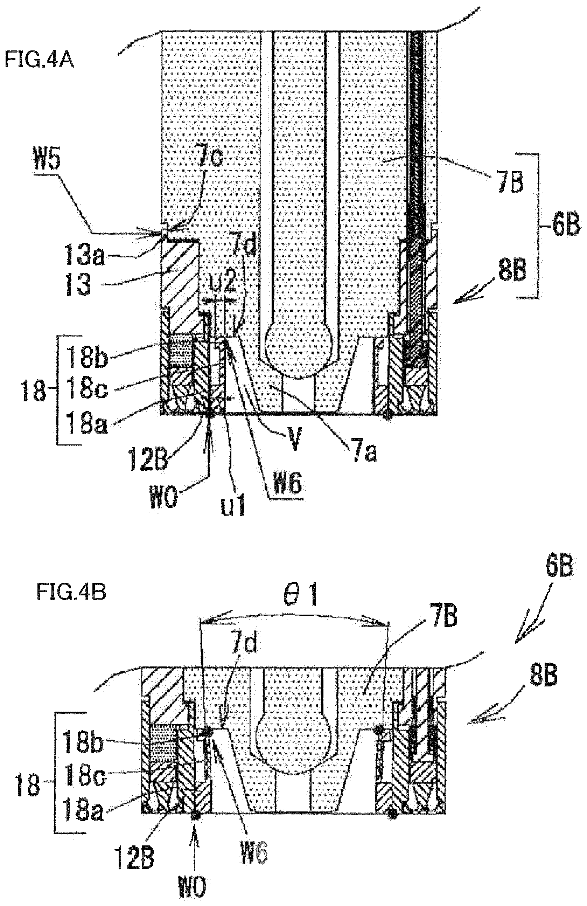

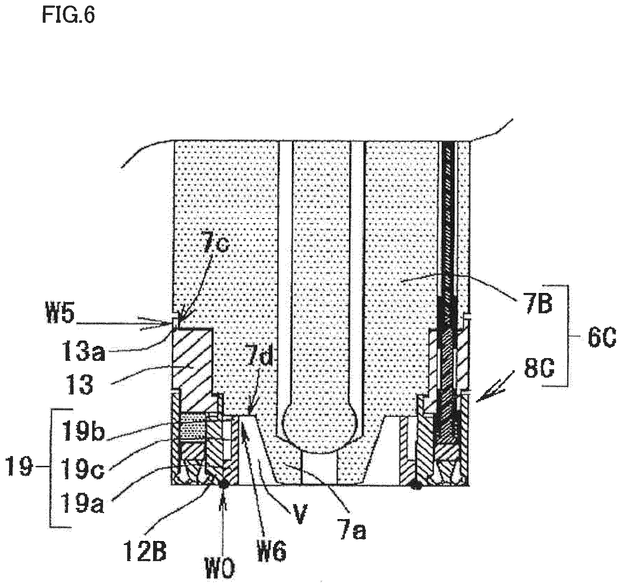

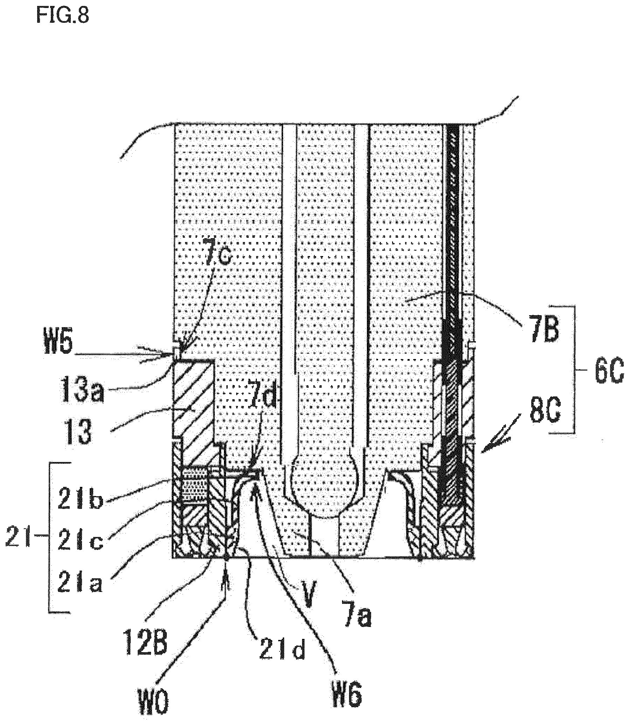

Hereinafter, the combustion pressure sensor according to the present invention will be explained. FIGs. 1-5 illustrate the first exemplary embodiment of Example 1. Among the figures, FIGs. 1-3 illustrate a basic configuration of an injector unit and an internal combustion engine to be embedded with the combustion pressure sensor of the present invention, and FIGs. 4-5 illustrate the configuration and the assembly process according to the first exemplary embodiment. Example 1 includes other two exemplary embodiments, and the basic configuration shown in FIGs. 1-3 is common to these exemplary embodiments. Features of the configurations of these exemplary embodiments are respectively illustrated in FIGs. 6 and 8.

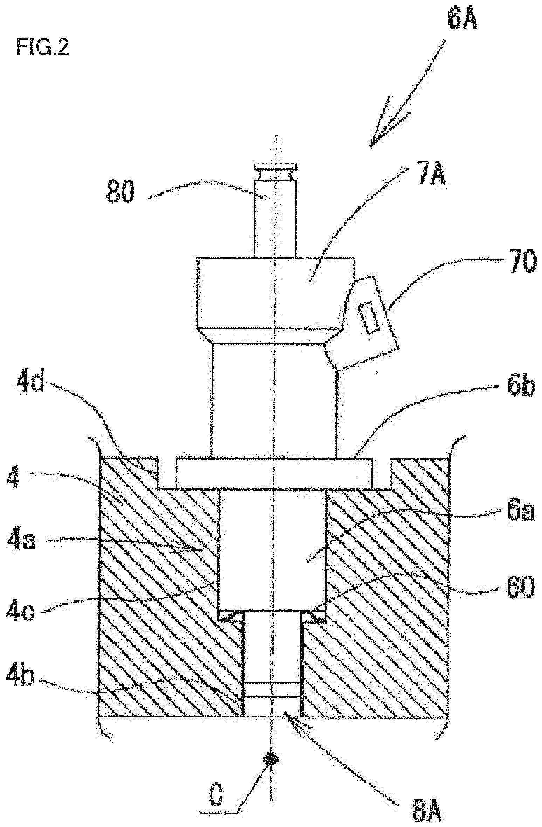

### [Explanation of the internal combustion engine according to the first to the third exemplary embodiments of Example 1: FIGs. 1 and 2]

First, using FIGs. 1 and 2, explanation will be given of a basic configuration of the internal combustion engine to be embedded with the combustion pressure sensor of the present invention. FIG. 1 illustrates a schematic configuration of the internal combustion engine 1. FIG. 2 is an enlarged view of the part S in FIG. 1. FIG. 1 shows the internal combustion engine 1 in a state where an injector unit 6A is incorporated therein. The injector unit 6A is formed by an injector 7A and a combustion pressure sensor 8A of the present invention mounted to the injector 7A. The internal combustion engine 1 is composed of: a cylinder block 2 including a cylinder 2a; a piston 3 reciprocating in the cylinder 2a; and a cylinder head 4 that is fastened to the cylinder block 2 to constitute a combustion chamber C with the cylinder 2a, the piston 3 and the like. The combustion chamber C is thus formed.

Further, the internal combustion engine 1 includes: the injector unit 6A that is attached to the cylinder head 4 and injects fuel into the combustion chamber C; and a spark plug 5 (shown by the dashed line in the figure) that is attached to the cylinder head 4 and ignites the air-fuel mixture in the combustion chamber C. Moreover, the injector unit 6A integrates the combustion pressure sensor 8A by mounting it to the tip portion of the injector 7A. Also, the injector unit 6A is mounted such that its sensor portion is located close to the combustion chamber C. This configuration allows the internal combustion engine 1 to directly detect pressure inside the combustion chamber C, which is generated by reciprocating motion of the piston 3 in each combustion cycle.

Next, the configuration for attaching the injector unit 6A to the cylinder head 4 will be explained using FIG. 2. As shown in FIG. 2, the cylinder head 4 is provided with a communication hole 4a that communicates the combustion chamber C with the outside to attach the injector unit 6A. The communication hole 4a is shaped to have a first hole portion 4b, a second hole portion 4c and a third hole portion 4d in this order from the combustion chamber C side. The second hole portion 4c has a larger hole diameter than the first hole portion 4b, and the third hole portion 4d has a larger hole diameter than the second hole portion 4c. The injector unit 6a is mounted so as to penetrate the communication hole 4a with the combustion pressure sensor 8a being located close to the combustion chamber C within the first hole portion 4b. The outer diameter of the combustion pressure sensor 8A is slightly smaller than the hole diameter of the first hole portion 4b.

Further, a body portion 6a of the injector unit 6A is inserted into the second hole portion 4c along with a gasket 60 and loose-fitted with the second hole portion 4c. Also, a flange portion 6b of the injector unit 6A is inserted into the third hole portion 4d. The upper surface of the flange portion 6b is clamped by a clamping device (not shown) provided outside the cylinder head 4, and thus the injector unit 6A is fixed while compressing the gasket 60 with the gasket 60. This configuration allows for airtightness so that the air-fuel mixture or combustion gas does not leak from the combustion chamber C.

Moreover, in FIG. 1, the injector unit 6A includes an electrical connector portion 70 and a fuel connector portion 80. The electrical connector portion 70 is for transmitting and connecting, to the outside, a pressure signal detected by the combustion pressure sensor 8A mounted to the outer periphery of the tip portion of the injector unit 6A. The fuel connector portion 80 is for supplying fuel to the injector 7A. Here, the combustion pressure sensor 8A uses a piezoelectric element as a pressure detection element, and the internal combustion engine 1 includes a signal processing portion 100 and a controlling device 200. The signal processing portion 100 receives an electric signal that is a weak charge obtained from the piezoelectric element, and performs amplification processing on the electric signal. The controlling device 200 receives the processed signal and instructs a predetermined control to each functional component attached to the internal combustion engine 1.

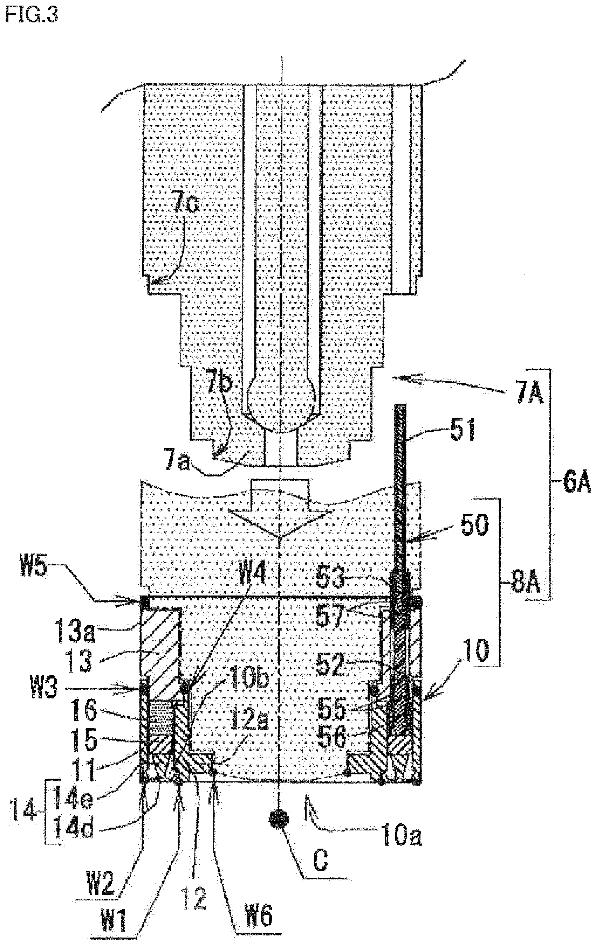

### [Explanation of the basic configuration of the combustion pressure sensor and the injector unit to which the first to the third exemplary embodiments of Example 1 are applied: FIG.3]

Next, the basic configuration of the combustion pressure sensor 8A will be explained using FIG. 3. The combustion pressure sensor 8A includes a pressure detection portion 10 and a transmission unit 50. The pressure detection portion 10 includes a piezoelectric element that converts a combustion pressure generated in the combustion chamber C into an electric signal. The transmission unit 50 transmits the signal from the pressure detection portion 10. The pressure detection portion 10 has a cylindrical shape as a whole, and is provided with an opening portion 10a that runs from a front end surface side of the combustion pressure sensor 8A, which is the side of the combustion chamber C, through to a back end surface side opposite to the front end surface side. The opening portion 10a stores the tip portion of the injector 7A.

Next, the configuration of the pressure detection portion 10 will be explained. The pressure detection portion 10 includes: an outer cylindrical portion 11 having a cylindrical shape; an inner cylindrical portion 12 having a cylindrical shape; a supporting member 13 having a cylindrical shape; and a pressure receiving member 14 having an annular shape. Through the assembly process (described later) in which the welding portion W1, the welding portion W2, the welding portion W3 and the welding portion W4 are welded and fixed according to a predetermined procedure, these components constitute a case portion that has a function as a housing of the entire pressure detection portion. Here, each welding point is indicated by a black circle in the figure, and laser welding is performed along the entire circumference for sealing and fixing. It should be noted that the black circle does not indicate a welding shape but merely indicates a welding position, and the same applies to the following explanations. Further, the pressure receiving member 14 is formed by integrating a pressure receiving portion 14d and a transmission portion 14e. The pressure receiving portion 14d is exposed to the combustion chamber C to receive a combustion pressure from the combustion chamber C. The transmission portion 14e is on the opposite side to the combustion chamber C with the pressure receiving portion 14d in-between, and transmits the pressure received by the pressure receiving portion 14d to a pressure transmission ring 15.

Further, an internal space 10b surrounded by the outer cylindrical portion 11, the inner cylindrical portion 12, the supporting member 13 and the pressure receiving member 14 is formed in the pressure detection portion 10. Inside this internal space 10b, the pressure transmission ring 15 for transmitting the pressure from the pressure receiving member 14 to the back end surface side, and piezoelectric elements 16 for converting the pressure transmitted from the pressure transmission ring 15 into an electric charge signal are provided. Here, the piezoelectric elements 16 are arranged in a circumferential direction at 60° intervals on the back end surface side of the pressure transmission ring 15. Additionally, inside the internal space 10b of the pressure detection portion 10, spacers (not shown) are arranged between respective piezoelectric elements 16 described above.

Then, the transmission unit 50 will be explained. The transmission unit 50 includes: a transmission wire 51; a connection terminal 52; a connection pipe 53; a positioning tube 55; a coil spring 56; and an O-ring 57. In the transmission unit 50, one end of the connection terminal 52 is stored within the pressure detection portion 10 to be connected to the piezoelectric elements 16, and the other end of the connection terminal 52 is connected to one end of the transmission wire 51 by swaging the connection pipe 53. These components are thus mechanically and electrically connected. Also, the other end of the transmission wire 51 is connected to the electrical connector portion 70 (see FIG. 2) of the injector 7A through a guide hole (not shown) for a signal wire provided to the injector 7A.

Moreover, the coil spring 56 for pressing the connection terminal 52 against the piezoelectric elements 16 to electrically connect them, the positioning tube 55 for guiding and insulating the connection terminal 52, and the O-ring 57 for sealing the periphery of the connection pipe 53 are arranged around the connection terminal 52 and the transmission wire 51.

Next, explanation will be given of the configuration for mounting the ring-shaped combustion pressure sensor 8A to a step portion provided to the tip portion of the injector 7A. Here, the injector 7A shown by the solid line indicates its state before mounting. Then, the injector 7A is moved in an arrow direction in the figure to stop at the position shown by the dashed line. This position represents a position for fixing the injector 7A and the combustion pressure sensor 8A. In this state, laser welding is performed along the entire circumference at each of the welding portion W5 and the welding portion W6 to fix the injector 7A and the combustion pressure sensor 8A. Thus the injector unit 6A is formed. Here, the welding portion W5 is a portion where a rear step portion 7c of the injector 7A engages with a protruding portion 13a of the supporting member 13. The welding portion W6 is a portion where a corner portion 7b of the tip portion 7a of the injector 7A engages with a protruding portion 12a of the inner cylindrical portion 12.

Since the outer cylindrical portion 11, the inner cylindrical portion 12 and the supporting member 13 are located close to the combustion chamber C and have high temperature, materials for these components are desirably those that can withstand an operating temperature environment of at least -40 °C to 350 °C. For example, SUS 630, SUS 316 and SUS 430 and the like of the JIS standard may be used. Also, a material for the pressure receiving member 14 is desirably an alloy that has high elasticity and is excellent in durability, heat resistance and corrosion resistance, taking into account that the pressure receiving member 14 is exposed in the combustion chamber C under high temperature and high pressure. For example, SUH 660 and the like may be used.

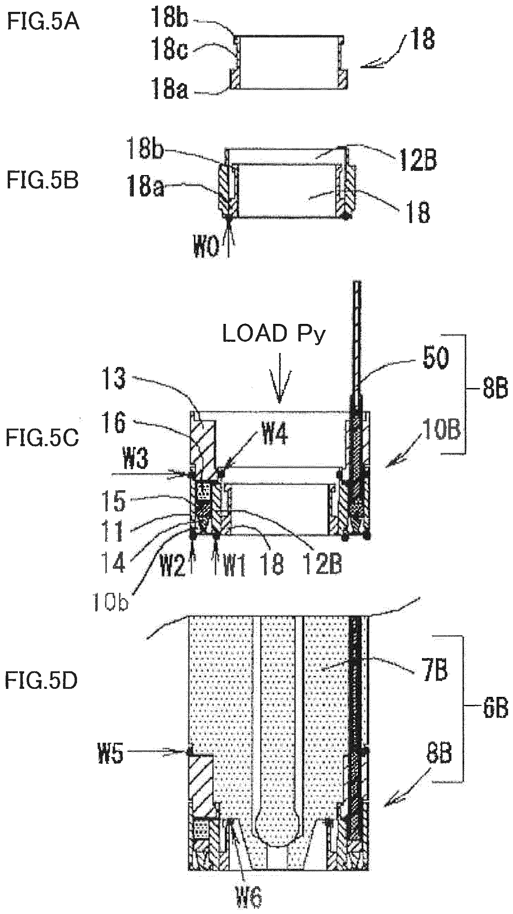

### [Explanation of the first exemplary embodiment of Example 1: FIGs. 4A, 4B and 5]

Next, the first exemplary embodiment of Example 1 will be explained using FIGs. 4 and 5. FIGs. 4A and 4B are cross-sectional views of an injector unit 6B, each illustrating a joint portion of a combustion pressure sensor 8B and an injector 7B. FIGs. 5A to 5D illustrate an assembly process.

A feature of the first exemplary embodiment lies in that a space for joining is provided between the inner cylindrical portion and the tip portion of the injector, and a connecting member is disposed using this space. The connecting member includes a distortion buffer portion. With the distortion buffer portion in between, one end of the connecting member is weld-fixed to the combustion pressure sensor and the other end is weld-fixed to the injector.

### [Explanation of the configuration: FIGs. 4A and 4B]

FIG. 4A is a cross-sectional view of the injector unit before welding, and FIG. 4B is a partial cross-sectional view of the injector unit after welding. Here, FIG. 4A shows the same part as that of FIG. 3 explained above. The injector unit of FIG. 4A is different from that of FIG. 3 in that the injector unit is provided with a space V around the joint portion on the front end surface side, and a weld ring 18 is disposed in the space V as a connecting member. Since other basic configuration is the same as that of FIG. 3, reference signs for the same parts and the same elements are omitted in the figure and the reference signs may be included in the following explanation as necessary.

First, as shown in FIG. 4A, the injector unit 6B is composed of: the combustion pressure sensor 8B attached with the weld ring 18; and the injector 7B that has a space for disposing the weld ring 18. Here, an inner cylindrical portion 12B constituting a case portion of the combustion pressure sensor 8B has a simple cylindrical shape without the protruding portion 12a, unlike the inner cylindrical portion 12 of the basic configuration shown in FIG. 3. Moreover, the injector 7B is shaped to have a tapered clearance portion with a step portion 7d formed at the tip portion 7a, unlike the injector 7A of the basic configuration shown in FIG. 3. Thus the space V is formed at the front end surface side of the mounting portion.

The weld ring 18 consists of a rectangular portion 18a at the front end surface side, a rectangular portion 18b at the back end surface side, and an intermediate rib portion 18c (an example of the distortion buffer portion). The width u2 of the rectangular portion 18b at the back end surface side is set smaller than the width u1 of the rectangular portion 18a at the front end surface side. The weld ring 18 of this cross sectional shape is cylindrical, and fitted to the inner diameter of the inner cylindrical portion 12B. The weld ring 18 is joined at the welding portion WO with its end portion at the front end surface side being aligned with the inner cylindrical portion 12B. Note that the weld ring 18 and the inner cylindrical portion 12B are joined to each other prior to the assembly process of the combustion pressure sensor, which will be described later. The rectangular portion 18b at the back end surface side of the weld ring 18 is configured to contact the step portion 7d provided to the injector 7B.

Next, weld-joining at the welding portions W5 and W6 will be explained. First, welding is performed at the welding portion W5 by irradiating it with laser light along the entire circumference. Here, the welding portion W5 is a portion where the step portion 7c provided to the rear part of the injector 7B engages with the step portion 13a provided to the supporting member 13.

Then, laser welding is similarly performed at the welding portion W6 as shown in FIG. 4B. When the welding takes place, welding heat is transmitted to the weld ring 18 and the injector 7B. Since the weld ring 18 has a smaller thickness and a smaller heat capacity than the injector 7B, welding heat is first transmitted to the weld ring 18 side. This causes the back end surface side of the weld ring 18 (the rectangular portion 18b side) to expand, deforming the weld ring 18 into a tapered shape (trumpet shape) with an angle θ1.

In this state, the rectangular portion 18b of the weld ring 18 is weld-fixed onto the step portion 7d provided to the injector 7B. At this time, the intermediate rib portion 18c with a predetermined length is present between the rectangular portion 18b at the back end surface side and the rectangular portion 18a at the front end surface side. This allows the rib portion 18c to absorb the influence, such as thermal distortion, that occurs from welding the rectangular portion 18b to the step portion 7d, thus making the inner cylindrical portion 12B unaffected by the influence of distortion occurring in the joint portion. The injector unit 6B with minimized heat deformation is thus formed. It should be noted that by forming the weld ring 18 with a material having a linear expansion coefficient comparable to the material for the injector 7B, it is possible to minimize the influence of distortion more effectively.

### [Explanation of the electrical connection structure and the detection operation: FIGs. 1, 2 and 3]

Next, an electrical connection structure of the injector unit 6B and its detection operation will be explained using FIGs. 1, 2 and 3. First, the electrical connection structure will be explained with reference to the injector unit 6A of FIG. 3, which has the basic configuration. The piezoelectric elements 16 constituting a piezoelectric element group each have a back end surface that is electrically connected to a ground electrode layer (not shown) provided to the supporting member 13, via a rear side electrode (not shown) provided to each back end surface of the piezoelectric elements 16. This results in the rear side electrodes of the piezoelectric elements 16 being electrically connected to the supporting member 13 and grounded.

On the other hand, each front end surface of the piezoelectric elements 16 is electrically connected to a ring-shaped output electrode layer (not shown) formed on the back end surface of the pressure transmission ring 15, via a front side electrode (not shown) provided to each front end surface of the piezoelectric elements 16. This results in the front side electrodes of the piezoelectric elements 16 being electrically connected on the ring-shaped output electrode layer formed on the back end surface of the pressure transmission ring 15.

Also, the output electrode layer provided to the pressure transmission ring 15 is electrically connected to the connection terminal 52 by a spring force of the coil spring 56, via an abutting portion on the front end surface side of the connection terminal 52. Further, the connection terminal 52 is electrically connected to a conductor portion of the transmission wire 51, from a connecting member on the back end surface side of the connection terminal 52 and through the connection pipe 53.

An electrical signal path from the connection terminal 52 to the connection pipe 53 and a path from the conductor portion of the transmission wire 51 to the electrical connector portion 70 of the injector are electrically insulated from the outer cylindrical portion 11, the inner cylindrical portion 12, the supporting member 13 and the metal part of the injector by the positioning tube 55, the O-ring 57, and an insulating resin layer formed on the surface of the transmission wire 51, which are made of an insulator.

Also, when the injector unit 6A is mounted to the cylinder head 4 of the internal combustion engine 1 shown in FIG. 1, within the communication hole 4a of the cylinder head 4 shown in FIG. 2, the flange portion 6b provided on the outer circumference of the injector is clamped and fixed to the end surface of the third hole portion 4d provided in the communication hole 4a. The injector unit 6A is thus electrically connected to the cylinder head 4 and grounded to the vehicle body.

As a result, when the internal combustion engine 1 is in operation, a combustion pressure is generated in the combustion chamber C and acts on the pressure receiving member 14 welded to the tip of the combustion pressure sensor. This combustion pressure is transmitted via the pressure transmission ring 15 to each piezoelectric element 16, which generates a charge corresponding to the combustion pressure. The charges generated by the respective piezoelectric elements 16 are summed and transmitted from the front end surfaces of the piezoelectric elements 16 to the output electrode layer provided to the pressure transmission ring 15 via the respective front side electrodes. The charge signal transmitted to the output electrode layer is then transmitted from the connection terminal 52 pressed by the coil spring 56 through the connection pipe 53 to the conductor portion of the transmission wire 51.

The charge signal transmitted to the conductor portion is then supplied to the signal processing portion 100 via the electrical connector portion 70 of the injector 7A. The charge signal supplied to the signal processor 100 is then subjected to signal processing, and the voltage corresponding to the charge is supplied to the controlling device 200. This allows the controlling device 200 to perform a predetermined control on the devices provided to each unit of the internal combustion engine, such as the injector 7A constituting the injector unit 6A, on the basis of the signal obtained from the combustion pressure.

### [Explanation of assembly processes: FIGS. 5A-5D]

Next, processes of assembling the combustion pressure sensor 8B and the injector unit 6B will be explained using FIGS. 5A-5D. FIGS. 5A-5D are cross-sectional views each illustrating a process of assembling the combustion pressure sensor 8B and the injector unit 6B. FIG. 5A illustrates the weld ring 18, FIG. 5B illustrates a process of joining the inner cylindrical portion 12B and the weld ring 18, FIG. 5C illustrates a process of assembling the pressure detection portion 10B, and FIG. 5D illustrates a process of joining the combustion pressure sensor 8B and the injector 7B. Although the assembly processes described below require jigs including a welding jig, an assembly jig and an adjustment jig, detailed description of the jigs is omitted.

First, FIG. 5A illustrates a cross section of the weld ring 18. The weld ring 18 includes the rectangular portion 18a at the front end surface side, the rectangular portion 18b at the back end surface side, and the intermediate rib portion 18c connecting the rectangular portions 18a and 18b. Next, FIG. 6B illustrates a process of joining the inner cylindrical portion 12B and the weld ring 18. The outer diameter of the weld ring 18 is fitted to the inner diameter of the inner cylindrical portion 12B. Then, in a state where the lower surface side of the inner cylindrical portion 12B is aligned with the lower surface side of the rectangular portion 18a on the front end surface side of the weld ring 18, laser welding is performed along the entire circumference of the welding portion W0.

FIG. 5C illustrates a process of assembling the pressure detection portion 10B and the transmission unit 50. The inner cylindrical portion 12B with the weld ring 18 obtained in the process shown in FIG. 5B, the outer cylindrical portion 11 and the pressure receiving member 14 are set to a predetermined assembly jig, and laser welding is performed along the entire circumference of the welding portions W1 and W2. Then, the pressure transmission ring 15, the piezoelectric elements 16, the transmission unit 50, and the supporting member 13 are stacked in this order inside the internal space 10b that is formed by the pressure receiving member 14, the inner cylindrical portion 12B, and the outer cylindrical portion 11.

Subsequently, a load is applied from the back end surface side of the supporting member 13 to the front end surfaces of the inner cylindrical portion 12B and the outer cylindrical portion 11. At this time, the pressure receiving surface of the pressure receiving member 14 is kept in a free state. Here, the load is applied to the piezoelectric elements 16 by utilizing the spring property of the pressure receiving portion of the pressure receiving member 14. Once the load reaches a predetermined load Py, laser welding is performed along the entire circumference of the welding portions W3 and W4. Thus, the pressure detection portion 10B and the combustion pressure sensor 8B that are applied with the predetermined load are formed.

FIG. 5D illustrates a process for joining the above described combustion pressure sensor 8B and the injector 7B. The injector 7B is mounted to the combustion pressure sensor 8B, and laser welding is performed along the entire circumference of the welding portions W5 and W6. The injector unit 6B is thus formed.

### [Advantageous effects of the first exemplary embodiment of the Example 1]

The first exemplary embodiment of the Example 1 explained above provides the following advantageous effects.

### [Advantageous effect 1]

The connecting member (the weld ring) having a distortion buffer portion is provided to the joint portion of the combustion pressure sensor and the functional component. This enables to make the case portion of the combustion pressure sensor unaffected by the influence of deformation that occurs in the joint portion of the combustion pressure sensor and the functional component.

### [Advantageous effect 2]

The process of joining the inner cylindrical portion constituting the case portion and the connecting member (the weld ring) is performed prior to the process of assembling the combustion pressure sensor. This allows for adjustment to the assembly of the combustion pressure sensor by taking into account the influence of thermal deformation that occurs during joining the inner cylindrical portion and the connecting member. Thus, the influence of thermal deformation of the inner cylindrical portion of the case portion can be minimized.

### [Advantageous effect 3]

The connecting member is made of a material with a liner expansion coefficient comparable to that of the material for the joint portion of the functional component. This enables to minimize thermal deformation during weld-joining of the connecting member and the functional component.

The above explanation of the combustion pressure sensor and the injector unit has been given using an example where a piezoelectric element is used for the pressure detection portion. However, other detection elements may be used, such as a distortion sensing element that uses a distortion resistance effect. Also, the above explanation has been given using an example where multiple ring-shaped piezoelectric elements are used for the structure of the pressure detection portion. However, the structure of the pressure detection portion is not limited to this. The pressure detection portion may use a ring-shaped piezoelectric element.

### [Explanation of the second exemplary embodiment of Example 1: FIG. 6]

Next, the second exemplary embodiment of Example 1 will be explained using FIG. 6. FIG. 6 is a cross-sectional view of an injector unit 6C, illustrating a joint portion of a combustion pressure sensor 8C and an injector 7B. The figure illustrates the same part as that shown in FIG. 4A explained above.

A feature of the second exemplary embodiment lies in that the embodiment uses a weld ring of a different shape. A rectangular portion 19b on the back end surface side of a weld ring 19, which is weld-fixed to the injector, has the same width as an intermediate rib portion 19c. As other basic configurations are the same as the first exemplary embodiment shown in FIG. 4A, the same parts and the same elements are denoted by the same reference signs and the redundant explanation will be omitted.

Using the weld ring of this shape can extend the length of the distortion buffer portion, enabling to further minimize the influence of thermal deformation on the case portion.

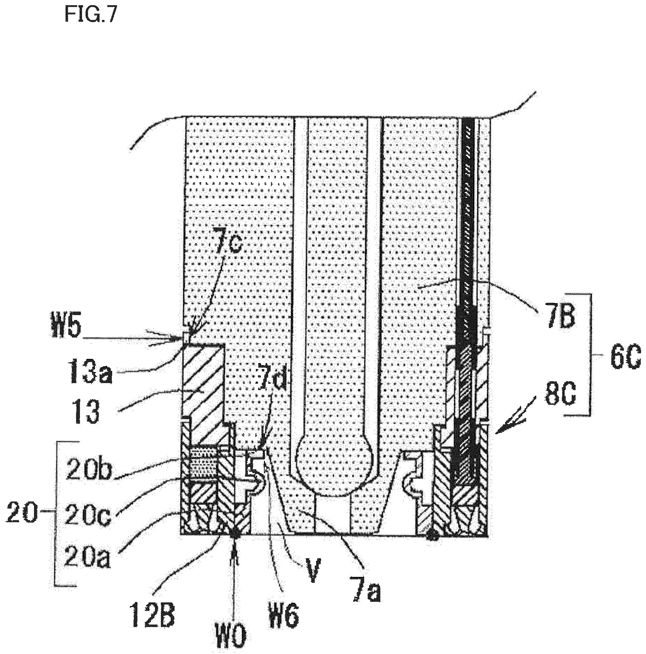

### [Explanation of the third exemplary embodiment of Example 1: FIG. 7]

Next, the third exemplary embodiment of Example 1 will be explained using FIG. 7. FIG. 7 is a cross-sectional view of the injector unit 6C, illustrating a joint portion of the combustion pressure sensor 8C and the injector 7B. The figure illustrates the same part as that shown in FIG. 4A explained above.

The third exemplary embodiment uses a weld ring of another different shape. A weld ring 20 includes a rectangular portion 20a on the front end surface side, a rectangular portion 20b on the back end surface side, and an intermediate rib portion 20c that has a curved shape. As other basic configurations are the same as the first exemplary embodiment shown in FIG. 4A, the same parts and the same elements are denoted by the same reference signs and the redundant explanation will be omitted.

Using the weld ring of this shape can impart elasticity to the distortion buffer portion, enabling to further minimize the influence of thermal deformation on the case portion.

### [Explanation of the fourth exemplary embodiment of Example 1: FIG. 8]

Next, the fourth exemplary embodiment of Example 1 will be explained using FIG. 8. FIG. 8 is a cross-sectional view of the injector unit 6C, illustrating a joint portion of the combustion pressure sensor 8C and the injector 7B. The figure illustrates the same part as that shown in FIG. 4A explained above.

The third exemplary embodiment uses a weld ring of another different shape. A weld ring 21 includes a rectangular portion 21a on the front end surface side, a rectangular portion 21b on the back end surface side, and an intermediate rib portion 21c. The rectangular portion 21b on the back end surface side extends toward the center of the injector along the step portion 7d of the injector. The rectangular portion 21a on the front end surface side has a chamfered portion 21d. As other basic configurations are the same as the first exemplary embodiment shown in FIG. 4A, the same parts and the same elements are denoted by the same reference signs and the redundant explanation will be omitted.

By extending the rectangular portion 21b on the back end surface side toward the center of the injector along the step portion 7d of the injector, it is possible to ensure a welding margin that is required to reliably weld the step portion 7d of the injector and the rectangular portion 21b on the back end surface side. The chamfered portion 21d is provided so that an outer shape of the weld ring 21 does not interfere with a laser light for laser-welding the step portion 7d of the injector and the rectangular portion 21b on the back end surface side. The chamfered portion 21d allows to secure a path of the laser light incident from the outside onto the rectangular portion 21b on the back end surface side. This enables to reliably weld the step portion 7d of the injection and the rectangular portion 21b on the back end surface side.

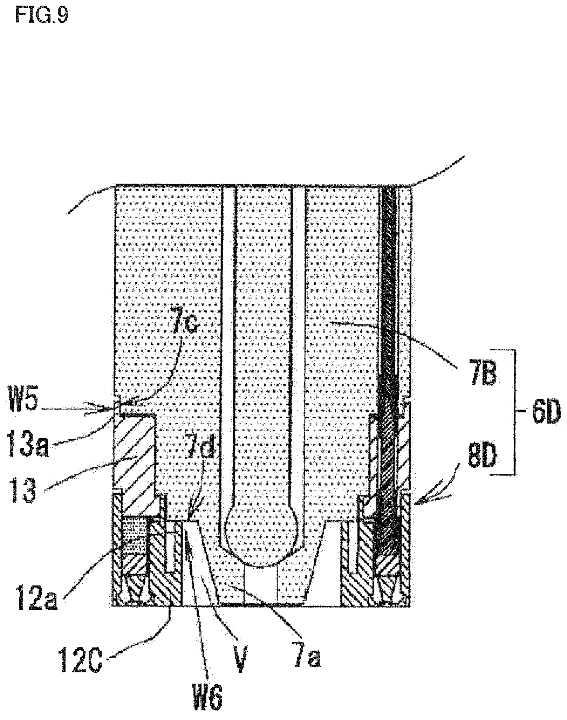

### [Explanation of the fifth exemplary embodiment of Example 1: FIG. 9]

Next, the fifth exemplary embodiment of Example 1 will be explained using FIG. 9. FIG. 9 is a cross-sectional view of an injector unit 6D, illustrating a joint portion of a combustion pressure sensor 8D and the injector 7B. The figure illustrates the same part as that shown in FIG. 4A explained above.

A feature of the fifth exemplary embodiment lies in that the shape corresponding to the weld ring is integrated into an inner cylindrical portion to form the inner cylindrical portion 12C. As other basic configurations are the same as the first exemplary embodiment shown in FIG. 4A, the same parts and the same elements are denoted by the same reference signs and the redundant explanation will be omitted.

Using the inner cylindrical portion of this shape can remove the process of joining the inner cylindrical portion and the weld ring, and also eliminate deformation of the inner cylindrical portion during joining.

Although the inner cylindrical portion is provided with a separate or an integral weld ring in the first to fifth exemplary embodiments of Example 1, the weld ring may be provided to the pressure receiving member instead of the inner cylindrical portion. Such configuration also provides the same advantages effects.

### [Example 2]

Hereinafter, the combustion pressure sensor and the spark plug unit according to the present invention will be explained. FIG. 10 is a cross-sectional view according to the first exemplary embodiment of Example 2, illustrating a joint portion of the combustion pressure sensor and the spark plug. The figure illustrates the same part as that shown in FIG. 4A explained above. Similarly to the injector and as a functional component, the spark plug faces the combustion chamber of the internal combustion engine. The spark plug has the same configuration as the exemplary embodiments of Example 1 in that the spark plug is mounted with the ring-shaped combustion pressure sensor of the present invention to detect a combustion pressure.

### [Explanation of the first exemplary embodiment of Example 2: FIG. 10]

The first exemplary embodiment of Example 2 will be explained using FIG. 10. In FIG. 10, the combustion pressure sensor 8B has the same configuration as that explained in FIG. 4A. Although the spark plug 5 has a different function from the injector, they are the same in that a step portion for mounting the combustion pressure sensor is provided to the tip portion and the combustion pressure sensor is joined to detect a combustion pressure. The spark plug 5 is provided with a step portion 5d on the front end surface side to form a space V in which the weld ring 18 is joined with the spark plug 5.

Next, joining at the welding portions W5 and W6 will be explained. The welding portion W5 is a portion where a step portion 5c in a rear part of the spark plug 5 engages with the protruding portion 13a of the supporting member 13. The welding portion W6 is a portion where a step portion 5d on the front end surface side of the spark plug 5 engages with the rectangular portion 18b on the back end surface side of the weld ring 18. Laser welding is performed along the entire circumference of the welding portions W5 and W6, thus forming a spark plug unit 9A.

As explained above, the combustion pressure sensor 8B of the present invention may be mounted to the tip portion of not only the injector but also the spark plug. Joining them with the weld ring enables to minimize the influence of thermal deformation on the case portion.

Although the spark plug unit 9A uses the same weld ring 18 as that explained in FIG. 4A, the weld ring is not limited to this. It is needless to say that the weld ring of the structure as explained in FIGS. 6 and 8 is also applicable.

### [Reference Signs List]

1... Internal combustion engine
2... Cylinder block
2a... Cylinder
3... Piston
4... Cylinder head
4a... Communication hole
C... Combustion chamber
5... Spark plug (functional component)
6A, 6B, 6C, 6D... Injector unit (functional component unit)
7A, 7B... Injector (functional component)
8A, 8B, 8C, 8D... Combustion pressure sensor
9A... Spark plug unit (functional component unit)
10, 10B... Pressure detection portion
10a... Opening portion
10b... Internal space
11... Outer cylindrical portion
12, 12B, 12C... Inner cylindrical portion
13... Supporting member
14... Pressure receiving member
15... Pressure transmission ring
16... Piezoelectric element
18, 19, 20, 21... Weld ring
50... Transmission unit
51... Transmission wire
52... Connection terminal
53... Connection pipe
55... Positioning tube
56... Coil spring
57... O-ring (sealing part)
70... Electrical connector portion
80... Fuel connector portion
100... Signal processing portion
200... Controlling device

## Claims

1. A combustion pressure sensor mounted to a functional component attached to a combustion chamber of an internal combustion engine, wherein
a pressure receiving member and a pressure detection element are supported by a housing, the pressure receiving member being a pressure receiving surface for receiving a combustion pressure, the pressure detection element detecting a pressure from the pressure receiving surface,
the mounting of the combustion pressure sensor to the functional component is performed by joining the functional component and a connecting member provided to at least one of the pressure receiving member and the housing, and
the connecting member is composed of a joint portion and a distortion buffer portion, the joint portion being joined with the functional component, the distortion buffer portion reducing influence of distortion occurring in the joint portion on the pressure receiving member or the housing.

2. The combustion pressure sensor according to claim 1, wherein the connecting member is integrally formed with the pressure receiving member or the housing.

3. The combustion pressure sensor according to claim 1, wherein the connecting member is formed separately from the pressure receiving member or the housing.

4. The combustion pressure sensor according to any one of claims 1 to 3, wherein the connecting member has a linear expansion coefficient that is comparable to a material of a joint portion of the functional component.

5. The combustion pressure sensor according to any one of claims 1 to 4, wherein the joining of the functional component and the connecting member is performed by welding.

6. The combustion pressure sensor according to any one of claims 1 to 5, wherein the combustion pressure sensor is cylindrically shaped,
the housing is composed of a housing unit and a cylindrical supporting member, the housing unit including an outer cylindrical portion and an inner cylindrical portion respectively constituting an outer surface and an inner surface of the combustion pressure sensor, and
the pressure detection element is arranged inside the housing unit, and the pressure receiving member and the supporting member are arranged so as to interpose the pressure detection element.

7. The combustion pressure sensor according to claim 6, wherein the connecting member has a cylindrical shape extending along the inner surface of the inner cylindrical portion.
